# EUROPÄISCHE PATENTSCHRIFT

(11) **EP 2 835 203 B1**
(45) Veröffentlichungstag und Bekanntmachung des Hinweises auf die Patenterteilung: **04.12.2019**
(21) Anmeldenummer: 14176539.6
(22) Anmeldetag: 10.07.2014
(51) Int. Cl.: B23F 17/00, B23Q 1/01, B23Q 1/48, B23Q 1/52, B23Q 3/155, B23Q 41/04

(54) **Werkzeugmaschine und Verfahren zur spanenden Bearbeitung von Werkstücken mit mindestens zwei separaten Bearbeitungseinheiten**
Machine tool and method for machining workpieces with at least two separate machining units
Machine-outil et procédé de traitement par enlèvement sur des pièces à usiner dotée d'au moins deux unités de traitement séparées

(30) Priorität: 08.08.2013 DE 102013013276
(43) Veröffentlichungstag der Anmeldung: 11.02.2015
(73) Patentinhaber: Liebherr-Verzahntechnik GmbH, 87437 Kempten (DE)
(72) Erfinder: Zeller, Thomas, 87437 Kempten (DE)
(74) Vertreter: Laufhütte, Dieter

(56) Entgegenhaltungen:
- WO-A2-2013/037947
- DE-C1- 971 083
- JP-A- S5 828 417
- US-A- 3 575 086

## Beschreibung

Die Erfindung betrifft eine Vorrichtung sowie ein Verfahren zur Herstellung oder Bearbeitung von für innen- oder außen verzahnte Großverzahnungen oder großen Zahnkränzen in Kleinserie, wobei wenigstens zwei Bearbeitungsverfahren zum Einsatz kommen mit dem Ziel einer Komplettbearbeitung von genauigkeitsrelevanten Flächen an diesen Werkstücken und unter Realisierung möglichst kurzer Produktionszeiten.

Aus dem Stand der Technik sind große Verzahnmaschinen bekannt die aktuell Bearbeitungsdurchmesser von 16.000 mm und mehr bearbeiten können. Dabei handelt es sich um Wälz- und Profilfräsmaschinen sowie Zahnradhobelmaschinen. Für etwas kleinere Werkstückdurchmesser gibt es diese Maschinen auch als Verzahnungsschleif- und Verzahnungsstoßmaschinen.

Nachdem die Werkstücke für den Verzahnprozess aus einer Vorbearbeitung wie z.B. einer Schmiedeoperation stammen oder aber bei sehr großen Werkstücken aus Einzelsegmenten zusammengesetzt werden, müssen diese vor einer Verzahnungsbearbeitung erst einmal einer Dreh-, Fräs- und/oder Bohrbearbeitung unterzogen werden um so die Funktionsflächen für die Verwendung dieser Zahnräder zu schaffen. Die Durchlaufzeiten für diese Bearbeitungsoperationen können bei Werkstücken dieser Größenordnung inklusive der Rüstzeiten teilweise ein bis zu mehreren Tagen dauern.

Die in der Großserienfertigung übliche Trennung von Vorbearbeitungs- und Verzahnoperationen auf mehrere einzelne Maschinen stellt bei der Herstellung von Großverzahnungen einen erheblichen Investitionsaufwand in mehrere Maschinen dar und zieht dann auch einen großen Platzbedarf für die Aufstellung der einzelnen Maschine nach sich. Für solche Maschinen werden dann schnell komplette Fertigungshallen neu projektiert. Noch dazu benötigen Maschinen dieser Dimension üblicherweise ein massives Zusatzfundament so dass diese Maschinen nicht so ohne weiteres in der Fertigung neu platziert werden können. Daraus ergeben sich erhebliche Investitionssummen die sich nur rechnen wenn auch entsprechende Stückzahlen dahinter stehen.

Bei sehr großen Verzahnung bzw. wenn nicht entsprechende Stückzahlen dahinter stehen, gibt es die Überlegung zu einer Kombinationsmaschine die sowohl die Verzahnoperationen als auch die vorbereitenden spanende Operationen wie z.B. Drehen, Fräsen oder Bohren bzw. weitere Zusatzoperationen wie Plan- und/oder Au-ßenrundschleifen, durchführen kann.

Hierzu gibt es schon verschiedene Konzepte für die Bearbeitung von Großverzahnungen die sich häufig an der Portalbauweise großer Senkrechtbearbeitungszentren orientiert wie es z.B. die DE 20 2007 012 450 U offenbart.

Bei dem gezeigten Senkrechtbearbeitungszentrum in der sogenannten Zweiständerausführung fahren die zwei Ständer parallel zum Werkstück (Y-Richtung) und bewegen so den, zwischen diesen Ständer befestigen, Querträger über das Werkstück. An dem Querträger ist ein Supportschlitten montiert, der unter einem rechten Winkel (X-Richtung) zur Fahrrichtung der Ständer entlang des Querschlittens verfahren werden kann. Durch diese Bewegungen in X-/Y-Richtung können bei ausreichendem Fahrweg nahezu alle Positionen über dem Werkstück angefahren werden.

Die Zustellung des Bearbeitungswerkzeuges zum Werkstück erfolgt über eine Absenkbewegung des Querbalkens (W-Richtung) und eine vertikale Zustellung (Z-Richtung parallel zur W-Richtung) der RAM-Konfiguration mit dem daran befestigen Fräskopf um das Werkzeug mit dem Werkstück in den Eingriff zu bringen. Der Querbalken muss in dieser Konfiguration Biege- und Torsionskräfte, die aus den Bearbeitungskräften und dem Gewicht des Bearbeitungskopfes resultieren, aufnehmen.

In der DE 10 2009 048 012 A1 wird eine Verzahnmaschine in Vertikalbauform in einer ähnlichen Ausführungsform beschrieben. Gegenüber der zuerst genannten Veröffentlichung werden die zwei Ständer mit dem Querbalken nicht verfahren sondern sind ortsfest. Dafür verfährt der Maschinentisch relativ zum Werkstück in Richtung auf den Bearbeitungskopf zu. Gegenüber der oben genannten Ausführung sind die bewegten Massen des Maschinentisches bei dieser Ausführungsform geringer.

Bei Großverzahnungen, speziell dann wenn große Module gefräst werden, treten sehr große Bearbeitungskräfte auf, die trotz alledem zu einer Biegung des Querbalkens und der vertikalen Führung der Ram- Konfiguration führen. Diese Kräfte führen wiederum zu einer Qualitätsminderung der damit gefrästen Verzahnungen unabhängig davon ob der Verzahnprozess ein Wälz- oder Profilfräsprozess ist. Hinsichtlich der Genauigkeit und der Kraftaufnahme aus dem Verzahnungsfräsprozess ist die Montageanordnung des Verzahnungsfräskopfes an einem Querträger mit RAM-Konfiguration dem klassischen Aufbau einer Verzahnmaschine nach dem Stand der Technik deutlich unterlegen. Für die normalen Dreh-, Fräs- oder Bohroperation die an diesen Werkstücken durchgeführte werden, sind die Kräfte aber niedriger, haben eine andere Kraftwirkrichtung und können durch diese Konstruktion eher aufgenommen werden ohne große Qualitätseinbußen. Wenn die zweite Bearbeitung eine Schleifbearbeitung ist sind noch niedrigere Kräfte von dem zweiten Bearbeitungskopf aufzunehmen.

Wobei auch in dieser Anordnung die Länge des Querträgers einen deutlichen Einfluss auf seine Biege- und Torsionseigenschaft hat, bzw. ein kürzerer Querträger gleicher Bauart deutlich bessere Eigenschaften hinsichtlich seiner Biegung und Torsion aufweist.

DE 971 083 C1 offenbart eine Karusselldrehbank mit eine Drehscheibe, zwei Ständer und einen an den beiden Ständern in vertikaler Richtung verschiebbare Querbalken, wobei ein Ständer Fest in der Mitte der Drehscheibe angeordnet ist.

Die Aufgabe der vorliegenden Erfindung besteht nun darin, die positiven Eigenschaften einer Verzahnmaschine nach dem Stand der Technik mit den positiven Eigenschaften eines Senkrechtbearbeitungszentrums für Dreh- Fräsoperationen in einer Zweiständerausführung zu kombinieren und dabei gleichzeitig die Stabilität der Gesamtmaschine noch zu erhöhen. Diese wird durch eine Werkzeugmaschine gemäß den Merkmalen des Anspruchs 1 gelöst. Weitere vorteilhafte Ausführungsformen sind Gegenstand der sich an den Hauptanspruch anschließenden abhängigen Ansprüche.

Die mit der Erfindung erzielten Vorteile bestehen insbesondere darin, dass statt einer Vielzahl von einzelnen Maschinen nur noch eine Werkzeugmaschine mit entsprechend geringerem Platzbedarf benötigt wird.

Vom Grundaufbau her wird eine Verzahnmaschine für Großmaschinen nach dem Stand der Technik mit einer Vertikal-Dreh-Fräseinrichtung mit zwei Ständern kombiniert. Gegenüber dem Stand der Technik unterschiedet sich diese Maschine aber darin, dass das Querportal sich nicht über die gesamte Maschinenbreite erstreckt und dabei sehr lang und somit beigeweich ausgeführt werden muss.

Die Aufgabe wird gemäß der vorliegenden Erfindung durch eine Werkzeugmaschine nach dem Anspruch 1 gelöst.

Um die Werkstücke auf den Maschinentisch zu laden, ist der Querträger/Portalträger bei der Maschine gemäß der Erfindung ausschwenkbar ausgeführt. Die Ausschwenkbarkeit des Quer-/Portalträgers bietet weiterhin noch einen weiteren Vorteil. So können innerhalb der Maschineneinhausung an definierten Bereitstellungsplätzen weitere Bearbeitungseinheiten und/oder Werkzeughalter gelagert werden. Über den Portalträger können diese Plätze durch den Bearbeitungskopf NC-gesteuert angefahren werden. Dort kann dann über eine automatische Schnittstelle ein Wechsel der Bearbeitungsköpfe und/oder ein Werkzeugwechsel durchgeführt werden, je nach Ausführung der gewählten Schnittstelle oder nach der gewählten Bearbeitungsoperation.

Der Portalträger kann zusammen mit dem mittleren Ständer und dem äußeren Ständer abgesenkt werden, so dass die Linearachsen der RAM-Konfiguration bei der Bearbeitung nicht so weit auskragt, was zu einer deutlich stabileren Achse führt, was wiederum ein besseres Bearbeitungsergebnis nach sich zieht oder aber deutlich höher Zerspanleistungen ermöglicht.

Eine Verfahrbarkeit des Querportals über das Werkstück ist nicht notwendig, da mit dieser Maschine vorzugsweise rotationssymmetrische Werkstücke bearbeitet werden. Durch eine Kombination der Tischdrehbewegung mit einer linearen Verfahrbarkeit der zweiten Bearbeitungseinheit radial zum Tisch, können alle notwendigen Arbeitspositionen angefahren werden.

Weitere Einzelheiten der Erfindung werden in den Zeichnung anhand von schematisch dargestellten Ausführungsbeispielen beschreiben.

Hierbei zeigt:
- Fig. 1:: zeigt eine Verzahnmaschine, insbesondere für Großverzahnungen, nach dem Stand der Technik;
- Fig. 2:: zeigt eine Werkzeugmaschine mit einem Bearbeitungskopf für Außenverzahnungen, nach einer Ausführungsform der vorliegenden Erfindung;
- Fig. 3:: zeigt eine Werkzeugmaschine mit einem Bearbeitungskopf für Innenverzahnungen, nach einer Ausführungsform der vorliegenden Erfindung;
- Fig. 4:: zeigt eine Werkzeugmaschine mit eingeschwenktem Portal, nach einer Ausführungsform der vorliegenden Erfindung;
- Fig. 5:: zeigt eine Werkzeugmaschine mit eingeschwenktem Portal und dem zweiten Bearbeitungskopf in seiner Arbeitsposition, nach einer Ausführungsform der vorliegenden Erfindung;
- Fig. 6:: zeigt eine Werkzeugmaschine mit eingeschwenktem Portal und dem zweiten Bearbeitungskopf in seiner Arbeitsposition, nach einer Ausführungsform der vorliegenden Erfindung; und
- Fig. 7:: zeigt einen Schnitt durch eine Werkzeugmaschine, nach einer Ausführungsform der vorliegenden Erfindung.

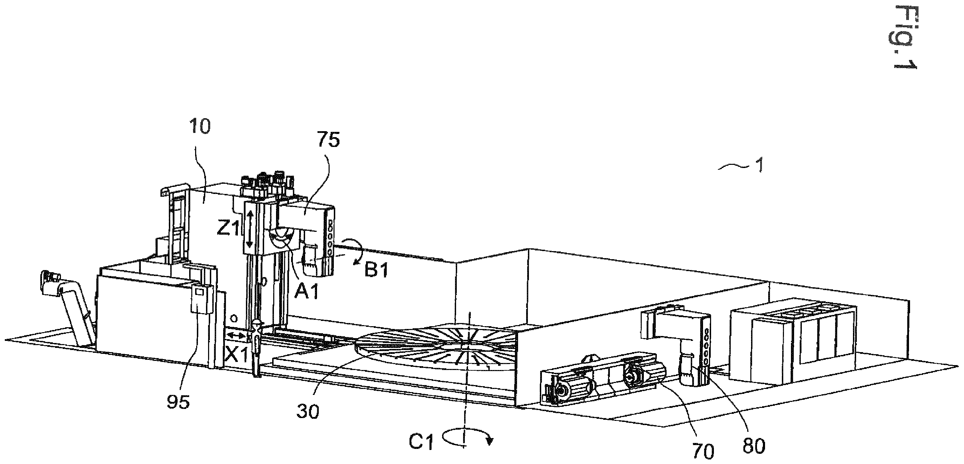

Figur 1 zeigt eine perspektivische Ansicht einer Verzahnmaschine 1 zur Bearbeitung von Innenverzahnungen nach dem Stand der Technik zur Bearbeitung von Großverzahnungen. Die Verzahnmaschine weist dabei die für die Bearbeitung notwendigen Freiheitsgrade auf und kann insbesondere die eingezeichneten Bewegungen A1, B1, C1, X1, sowie Z1 ausführen. Im Einzelnen beschreibt X1 die Radialbewegung des Ständerschlittens, Z1 die Axialbewegung des Werkzeugs, B1 die Drehbewegung des Werkzeugs, C1 die Drehbewegung des Werkstücks sowie A1 die Schwenkbewegung des Werkzeugs. Mit dem dargestellten Bearbeitungskopf für Innenverzahnungen 75 können Werkstücke die auf dem Maschinentisch 30 befestigt sind an Ihrem Innendurchmesser bearbeitet werden. Hierzu wird der Bearbeitungskopf für Innenverzahnungen 75 mit dem Maschinenständer 10 an die Bearbeitungsstelle mit der X1- Achse herangefahren und taucht während der Bearbeitung durch eine Linearbewegung der Z1- Achse in das Werkstück ein und erzeugt dabei die Verzahnung, wobei sich dazu das Werkzeug um seine B1 Achse dreht. Gesteuert wird dies durch eine NC-Steuerung mit einer Bedieneinheit 95. Die weiteren Bearbeitungsköpfe 70, 80 können gegen den Bearbeitungskopf für Innenverzahnungen 75 bei Bedarf ausgetauscht werden, wenn z.B. eine Außenverzahnung bearbeitet werden soll. In diesem Fall wird der Bearbeitungskopf für Außenverzahnungen 70 anstelle des Bearbeitungskopfes für Innenverzahnungen 75 montiert.

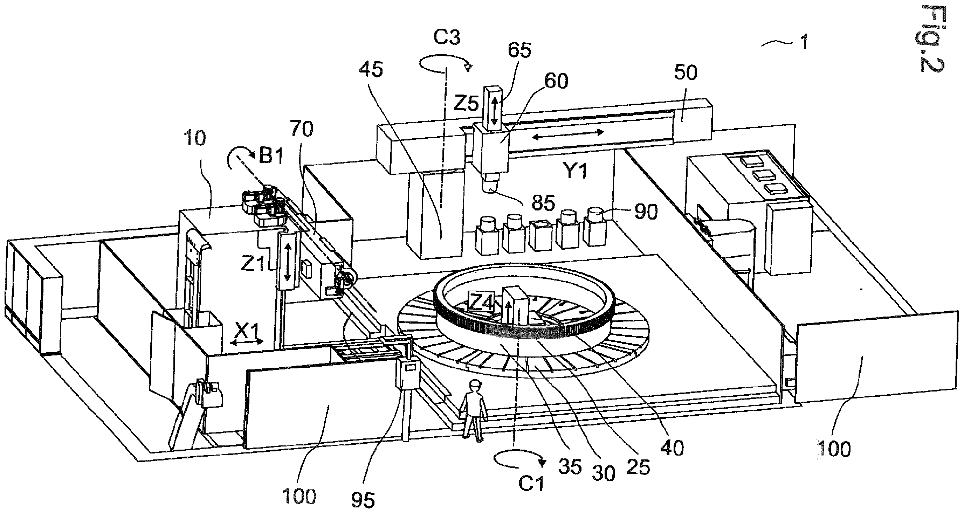

In der Figur 2 wird eine perspektivische Darstellung eines Ausführungsbeispiels der erfindungsgemäßen Maschine gezeigt. Wiederum ist der Bearbeitungskopf für Außenverzahnungen 70 der am Maschinenständer 10 montiert. Der Portalträger 50 mit dem daran montieren zweiten Bearbeitungskopf 60 befindet sich in einer ausgeschwenkten Position. Diese Position wir erreicht, in dem der Portalträger um die C3-Achse auf der äußeren Abstützsäule 45 geschwenkt wird. Die Abstützsäule 40 in der Mitte des Maschinentisches 30 ist hier in ihrer abgesenkten Position dargestellt.

Der zweite Bearbeitungskopf 60 weist in dieser Ausführungsform eine Vertikalführung 65 auf, über die eine Bearbeitungseinheit 85 mit der Z5-Achse in Richtung auf das Werkstück 25 zugestellt werden kann und dort mit dem Werkstück in Eingriff gebracht wird. Das Werkstück 25 ist dabei auf der Vorrichtung 35 und auf dem Maschinentisch 30 aufgespannt.

In der ausgeschwenkten Position des Portalträgers kann auch ein Wechsel der Bearbeitungseinheiten 85 oder des Werkzeuges für eine Bearbeitungseinheit erfolgen. Der Bearbeitungskopf 60 wird hierzu über die Y1-Achse entlang des Protalträgers 50 verfahren so lange bis sich ein leerer Bereitstellungsplatz 90 unter dem Bearbeitungskopf 60 befindet. Anschließend wird die Bearbeitungseinheit 85 über die Lineareinheit 65 in Z5-Achsrichtung abgesenkt und die nicht mehr benötigt Bearbeitungseinheit 85 oder das Werkzeug wird in diesem Platz abgelegt in dem die automatische Schnittstelle nach dem Erreichen der Ablegeposition geöffnet wird. Die Lineareinheit 65 wird wieder nach ober gefahren und der Bearbeitungskopf 60 führt über die Position mit dem neuen Werkzeug oder der neuen Bearbeitungseinheit. Dort fährt die Lineareinheit 65 nach unten bis sie mit ihrer automischen Schnittstelle auf das nächste Werkzeug oder den nächsten Bearbeitungskopf auffährt. Die Schnittstelle schließt sich und die Lineareinheit 65 fährt zusammen mit dem neuen Werkzeug oder Bearbeitungseinheit 85 wieder zurück in die Arbeitsposition durch eine Y1-Achsbewegung und ein einschwenken des Portalträges um die C3-Achse. Aus Sicherheitsgründen wird der Arbeitsraum während der Bearbeitung geschlossen in dem die beiden Schiebetüren 100 zusammen gefahren werden.

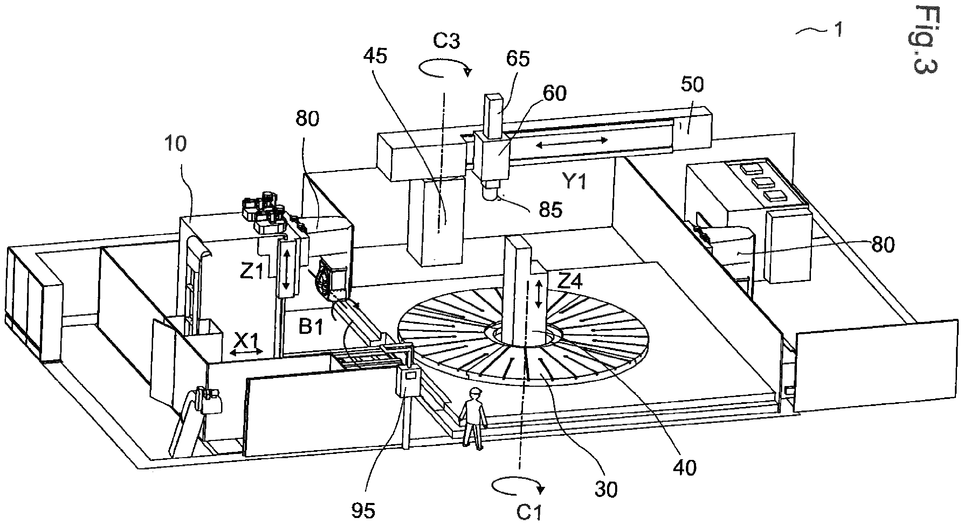

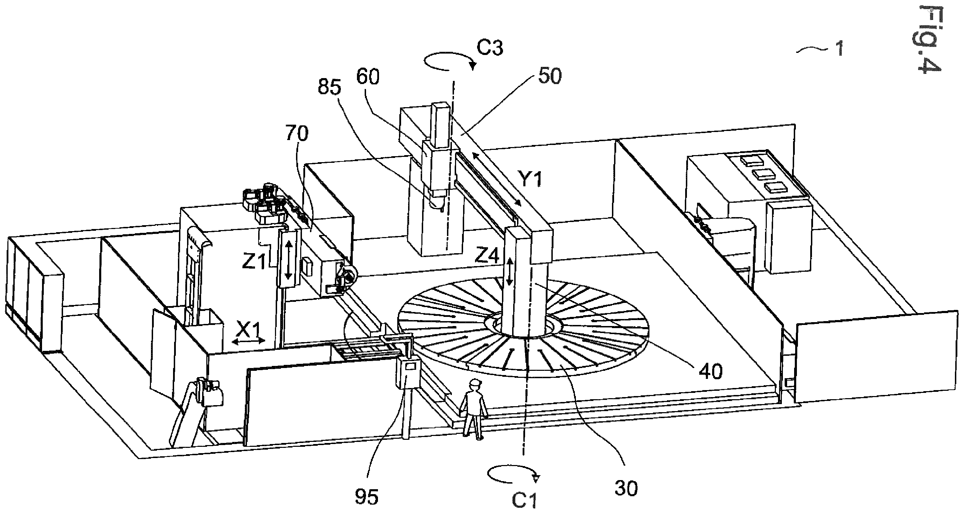

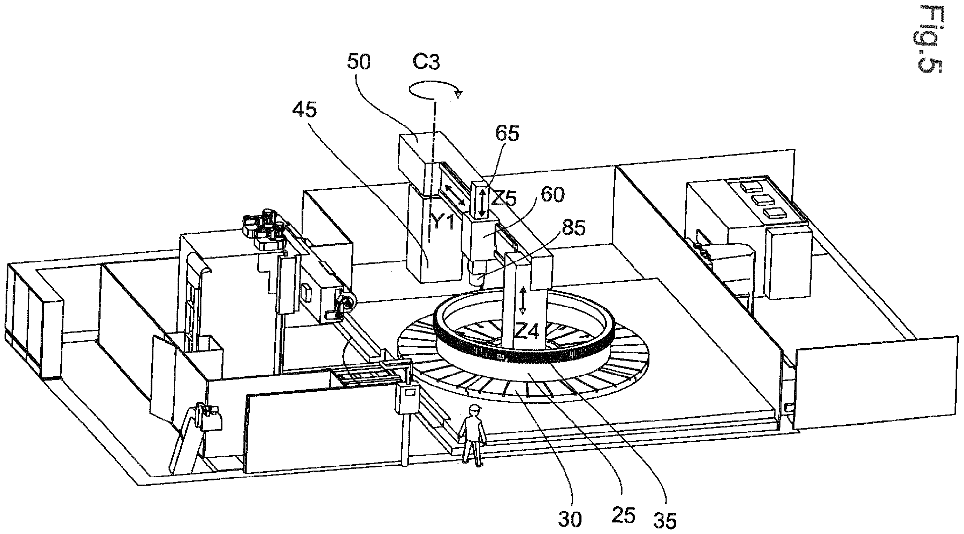

Figur 3 zeigt nun eine perspektivische Darstellung der erfindungsgemäßen Maschine bei der die Mittlere Abstützsäule angehoben ist. Durch schwenken des Portalträgers um die C3-Achse kann nun der Portalträger in seine Arbeitsposition gebracht werden. Dazu wird das vordere Ende des Trägers über hierzu geeignete Koppelelemente mit der Abstützsäule in Tischmitte 40 gekoppelt, wie dies in der Fig. 4 dargestellt wird. Zur Bearbeitung kann nun der zweite Bearbeitungskopf 60 entlang der Y1 Achse in Richtung auf die Tischmitte in seine Arbeitsposition verfahren. Dargestellt wir diese Situation in der Fig. 5. Die Bearbeitungseinheit 85 befindet sich dabei im Eingriff mit dem Werkstück 25 und bearbeitet dessen Oberfläche.

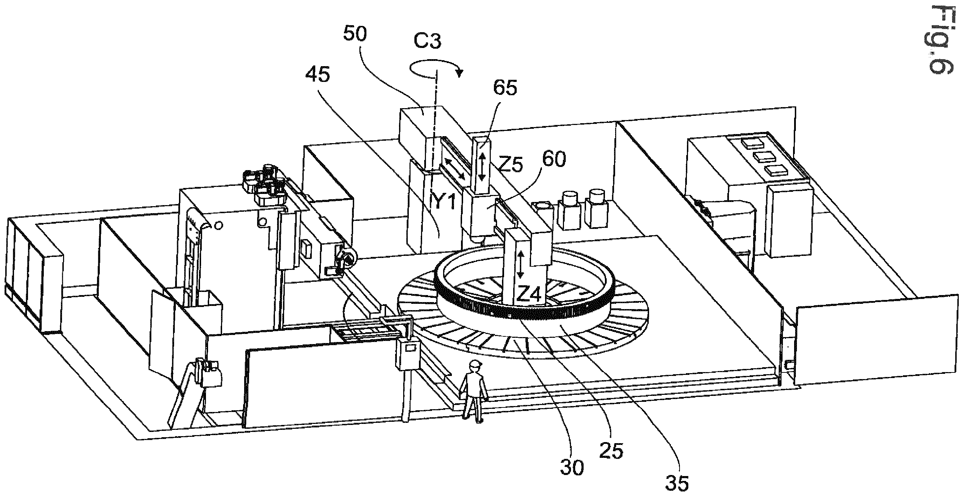

Die Fig. 6 zeigt die erfindungsgemäße Maschine in einer Ausführung bei der, die zwei Ständer 40,45 zusammen mit dem Portalträger abgesenkt wurden, um das Werkzeug in Eingriff zubringen. Hierdurch ist die Auskragung der Lineareinheit deutlich reduziert. Damit können höhere Zerspanungsleitungen gefahren werden oder die Qualität der bearbeiteten Fläche wird bedingt durch eine geringere Durchbiegung der Lineareinheit verbessert.

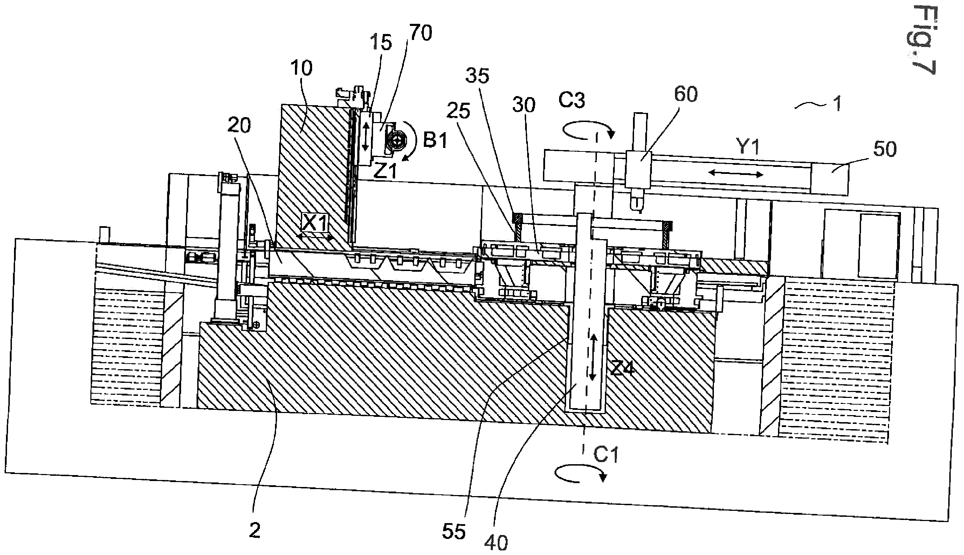

Ein Schnitt durch eine Ausführungsform der erfindungsgemäßen Maschine wird in der Fig. 7 gezeigt. Gezeigt wird die Abstützsäule 40 in der Mitte des Maschinentisches 30 in ihrer abgesenkten Position. Gelagert wird die Säule in einer Lagerstelle 55, die eine Bewegung der Abstützsäule in Richtung der Z4-Achse zulässt. Auf dem Maschinentisch 30 ist ein Werkstück 25 mit der Vorrichtung 35 montiert. Zur Bearbeitung dieses Werkstückes 25 wird der Bearbeitungskopf 70 mit dem Ständer 10 entlang X1-Achse auf dem Ständerbett 20 in Richtung auf das Werkstück 25 zugestellt. Der Schlitten 15 dient dazu den Bearbeitungskopf 70 in Z1-Richtung in der Höhe zu verstellen bzw. den Bearbeitungskopf 70 in Achsrichtung des Werkstückes 25 zu bewegen, während das Werkzeug die Verzahnung erzeugt oder bearbeitet.

## Patentansprüche

1. Werkzeugmaschine zur Bearbeitung von Werkstücken mit wenigstens zwei Bearbeitungseinrichtungen wobei wenigstens eine Bearbeitungseinrichtung (70, 80) zur spanenden Herstellung und Bearbeitungen und eine zweite Bearbeitungseinrichtung (60) zu einer weiteren Bearbeitung von Werkstücken (25) vorgesehen ist, wenigstens eine der Bearbeitungseinrichtungen an einem Portalträger (50) befestigt ist, der sich in der Mitte eines Werkstücktisches (30) mittels eines Ständers (40) abstützt,
**dadurch gekennzeichnet, dass**
der Ständer (40) in der Mitte des Werkstücktisches (30) absenkbar ausgeführt ist.

2. Werkzeugmaschine nach Anspruch 1, **dadurch gekennzeichnet, dass** die eine Bearbeitungseinrichtung zur Herstellung und/oder Bearbeitung von Verzahnungen (75) ausgeführt ist.

3. Werkzeugmaschine nach Anspruch 1, **dadurch gekennzeichnet, dass** die eine Bearbeitungseinrichtungen zur Herstellung und/oder Bearbeitung von Verzahnungen auswechselbar ausgeführt ist, so dass verschiedene Bearbeitungsköpfe für unterschiedliche Verzahnungsbearbeitungen montiert werden können.

4. Werkzeugmaschine nach Anspruch 1 bis 3, **dadurch gekennzeichnet, dass** der Portalträger (50) mit der zweiten Bearbeitungseinrichtung (60) ausschwenkbar ausgeführt ist.

5. Werkzeugmaschine nach einem der vorhergehenden Ansprüche, **dadurch gekennzeichnet, dass** beide Auflagen für den Portalträger in der Höhe verfahrbar ausgeführt sind.

6. Werkzeugmaschine nach einem der vorhergehenden Ansprüche, **dadurch gekennzeichnet, dass** die Bearbeitungsköpfe der mindestens zwei Bearbeitungseinrichtungen über eine automatisierte Schnittstelle wechselbar bzw. austauschbar ausgeführt sind.

7. Werkzeugmaschine nach einem der vorhergehenden Ansprüche, **dadurch gekennzeichnet, dass** die Bearbeitungsköpfe der mindestens zwei Bearbeitungseinrichtungen mit einer automatisierte Schnittstelle zum Werkzeugwechsel ausgerüstet sind.

8. Verfahren zum Bearbeiten eines Werkstückes auf einer Maschine nach einem der vorhergehenden Ansprüche, **dadurch gekennzeichnet, dass** neben einer Verzahnungsbearbeitung eine weitere Bearbeitung am Werkstück ausgeführt wird.

9. Verfahren nach Anspruch 8, **dadurch gekennzeichnet, dass** die Verzahnbearbeitung eine Wälzfräs-, Profilfräs-, Wälzschleif-, Profilschleif- oder Wälzstoßbearbeitung ist.

10. Verfahren nach Anspruch 8, **dadurch gekennzeichnet, dass** die weitere Bearbeitungs eine Dreh-, Fräs-, Bohr- oder Flächenschleifbearbeitung ist.

11. Verfahren nach Anspruch 8 bis 10, **dadurch gekennzeichnet, dass** neben der Bearbeitung von rotationssymmetrischen Werkstücken auch Segmente und unrunde Werkstücke bearbeitbar sind.

12. Verfahren gemäß einem der Ansprüche 8 bis 11, **dadurch gekennzeichnet, dass** die Verzahnbearbeitung eine Bearbeitung von Aussen- und/oder Innenverzahnungen ist.

13. Verfahren zum automatisierten Wechsel der Bearbeitungseinrichtung oder der Werkzeuge an einer Werkzeugmaschine nach einem der Ansprüche 6 bis 7.

## Claims

1. A machine tool for the machining of workpieces having at least two machining devices, wherein at least one machining device (70, 80) is provided for the cutting manufacture and machining and a second machining device (60) is provided for a further machining of workpieces,
at least one of the machining devices is fastened to a portal carrier (50) which is supported in the middle of a workpiece table (30) by means of a stand (40), **characterized in that**
the stand (40) in the center of the workpiece table (30) is configured to be lowerable (30).

2. A machine tool in accordance with claim 1, **characterized in that** the one machining device is designed for the manufacture and/or machining of teeth (75).

3. A machine tool in accordance with claim 1, **characterized in that** the one machining device is designed as replaceable for the manufacture and/or machining of teeth so that different machining heads can be mounted for different tooth machining.

4. A machine tool in accordance with claims 1 to 3, **characterized in that** the portal carrier (50) is designed as outwardly pivotable with the second machining device (60).

5. A machine tool in accordance with one of the preceding claims, **characterized in that** both supports for the portal carrier are designed as travelable in height.

6. A machine tool in accordance with one of the preceding claims, **characterized in that** the machining heads of the at least two machining devices are designed as changeable or replaceably via an automated interface.

7. A machine tool in accordance with one of the preceding claims, **characterized in that** the machining heads of the at least two machining devices are equipped with an automated interface for tool changing.

8. A method of machining a workpiece on a machine in accordance with one of the preceding claims, **characterized in that** a further machining is carried out on the workpiece beside the tooth machining.

9. A method in accordance with claim 8, **characterized in that** the tooth machining is a generating grinding, profile milling, gear grinding, profile grinding or gear shaping machining.

10. A method in accordance with claim 8, **characterized in that** the further machining is a turning, milling, drilling or surface grinding machining.

11. A method in accordance with claims 8 to 10, **characterized in that** segments and non-round workpieces can also be machined in addition to the machining of rotationally symmetrical workpieces.

12. A method in accordance with one of the claims 8 to 11, **characterized in that** the gear cutting machining is a machining of outer teeth and/or inner teeth.

13. A method for the automated change of the machining device or of the tools at a machine tool in accordance with one of the claims 6 to 7.

## Revendications

1. Machine-outil servant à usiner des pièces avec au moins deux dispositifs d'usinage, dans laquelle au moins un dispositif d'usinage (70, 80) est prévu aux fins de la fabrication par enlèvement de copeaux et d'usinages et un deuxième dispositif d'usinage (60) est prévu aux fins d'un usinage ultérieur de pièces (25),
au moins un des dispositifs d'usinage est fixé au niveau d'un porte-portique (50), qui prend appui au centre d'un plateau de pièce (30) au moyen d'un support (40),
**caractérisée en ce que**
le support (40) est réalisé de manière à pouvoir être abaissé au centre du plateau de pièces (30).

2. Machine-outil selon la revendication 1, **caractérisée en ce qu'**un dispositif d'usinage est réalisé aux fins de la fabrication et/ou de l'usinage de dentures (75).

3. Machine-outil selon la revendication 1, **caractérisée en ce qu'**un dispositif d'usinage servant à la fabrication et/ou à l'usinage de dentures est réalisé de manière interchangeable de sorte que différentes têtes d'usinage peuvent être montées pour différents usinages de denture.

4. Machine-outil selon la revendication 1 à 3, **caractérisée en ce que** le porte-portique (50) est réalisé de manière à pouvoir pivoter avec le deuxième dispositif d'usinage (60).

5. Machine-outil selon l'une quelconque des revendications précédentes, **caractérisée en ce que** les deux supports pour le porte-portique sont réalisés de manière à pouvoir être déplacés en hauteur.

6. Machine-outil selon l'une quelconque des revendications précédentes, **caractérisée en ce que** les têtes d'usinage des au moins deux dispositifs d'usinage sont réalisées de manière interchangeable ou remplaçable par l'intermédiaire d'une interface automatisée.

7. Machine-outil selon l'une quelconque des revendications précédentes, **caractérisée en ce que** les têtes d'usinage des au moins deux dispositifs d'usinage sont équipées d'une interface automatisée aux fins du changement d'outil.

8. Procédé servant à usiner une pièce sur une machine selon l'une quelconque des revendications précédentes, **caractérisé en ce qu'**outre un usinage de denture, un usinage ultérieur est exécuté sur la pièce.

9. Procédé selon la revendication 8, **caractérisé en ce que** l'usinage de denture est un usinage par fraisage en développante, par profilage à la fraise, par rectification en développante, par rectification de profils ou par taillage par mortaisage.

10. Procédé selon la revendication 8, **caractérisé en ce que** l'usinage ultérieur est un usinage par rectification par rotation, à la fraise, au foret ou de surface.

11. Procédé selon la revendication 8 à 10, **caractérisé en ce qu'**outre l'usinage de pièces symétriques en rotation, des segments et des pièces non rondes peuvent également être usinés.

12. Procédé selon l'une quelconque des revendications 8 à 11, **caractérisé en ce que** l'usinage de denture est un usinage de dentures extérieures et/ou intérieures.

13. Procédé servant à changer de manière automatisée le dispositif d'usinage ou les outils au niveau d'une machine-outil selon l'une quelconque des revendications 6 à 7.
